# EUROPÄISCHE PATENTANMELDUNG

(11) **EP 1 031 866 A2**
(43) Veröffentlichungstag der Anmeldung: **30.08.2000**
(21) Anmeldenummer: 00103542.7
(22) Anmeldetag: 18.02.2000
(51) Int. Cl.: G02B 26/12

(54) **Relaisoptik für ein Ablenksystem sowie ein Ablenksystem**

(30) Priorität: 18.02.1999 DE 19906874
(71) Anmelder: CARL ZEISS JENA GmbH, 07745 Jena (DE)
(72) Erfinder: Röder, Rolf, 07745 Jena (DE)
(74) Vertreter: Geyer, Werner, Dr.-Ing.

(57) **Zusammenfassung**

Bei einer Relaisoptik (22) für ein Ablenksystem mit zwei Scaneinrichtungen (4, 6), von denen jede den Winkel eines Lichtbündels (2, 3) von einem für jede Scaneinrichtung (4, 6) separat vorgegebenen Ort (14, 18) in einer vorgegebenen Ablenkebene innerhalb eines vorgegebenen Ablenkbereichs ändert, ist ein optisches System (32) und eine Spiegelfläche (34) vorgesehen, wobei die optische Achse (30) in Position und Richtung mit der Mittelsenkrechten der Verbindungsgeraden zwischen den vorgegebenen Orten (14, 18) der ersten und zweiten Scaneinrichtung (4, 6) übereinstimmt und die Form und Position der Spiegelfläche (34) gemäß der Bedingungen ausgebildet ist, daß die beiden Vektoren, der Richtungsvektor des Lichtbündels (2) sowie die Flächennormale der Spiegelfläche (34), jeweils projiziert in die Ablenkebene der ersten Scaneinrichtung (4), für jeden durch die Ablenkung der ersten Scaneinrichtung (4) gegebenen Auftreffpunkt des Lichtbündels (2) auf der Spiegelfläche (34) richtungsgleich sind und daß der Weg des zur Fokalfläche (40) des optischen Systems laufenden Lichtbündels (2) mit der optischen Achse (30) des optischen Systems (32) als Symmetrieachse spiegelsymmetrisch zum Weg des von der Fokalfläche (40) zurück laufenden Lichtbündels (3) ist.

## Beschreibung

Die Erfindung bezieht sich auf eine Relaisoptik für ein Ablenksystem, bei dem zwei Scaneinrichtungen vorgesehen sind, von denen jede den Winkel eines Lichtbündels von einem für jede Scaneinrichtung separat vorgegebenen Ort in einer vorgegebenen Ablenkebene innerhalb eines vorgegebenen Ablenkbereichs ändert, und die Relaisoptik ein erstes optisches System, das ein von dem vorgegebenen Ort für die erste Scaneinrichtung ausgehendes paralleles Lichtbündel auf einer Fokalfläche fokussiert, sowie ein zweites optisches System, welches das dann von der Fokalfläche kommende Lichtbündel parallelisiert sowie zu dem vorgegebenen Ort der zweiten Scaneinrichtung ablenkt, aufweist. Weiter bezieht sich die Erfindung auf ein Ablenksystem, bei dem diese Art von Relaissystemen einsetzbar ist.

Ablenksysteme der genannten Art werden sowohl in der Laserdrucktechnik als auch in der Laservideotechnik eingesetzt. Diesen Techniken ist gemeinsam, daß zur Darstellung eines Bildes eine Matrixanordnung von Bildpunkten in einem Raster mittels einem Laserlichtbündel oder einem anderen hochgradig parallelen Lichtbündel beleuchtet wird. Dabei wird das Lichtbündel über eine zu beleuchtende Fläche, beispielsweise auf einem Bildschirm, über mehrere Zeilen in der sogenannten Zeilenrichtung gerastert. In der senkrecht zur Zeilenrichtung liegenden Richtung, üblicherweise auch als Bildrichtung bezeichnet, wird ebenfalls, allerdings mit verringerter Geschwindigkeit, gerastert, so daß mit Hilfe des Lichtbündels im Zeitmittel eine rechteckige Bildfläche entsteht.

Zu jedem Zeitpunkt wird das Lichtbündel, während es aufgrund des Rasterns unterschiedliche Bildpunkte der Fläche beleuchtet, mit unterschiedlicher Farbe und Helligkeit, je nachdem für jeden beleuchteten Bildpunkt gewünschten Informationsinhalt, moduliert. Dadurch entsteht auf der Fläche bei geeigneter Modulation ein farbiges Bild, wie aus der herkömmlichen Fernsehtechnik bekannt ist, die allerdings statt Lichtbündel Elektronenstrahlen verwendet und das Bild erst mittels einem Leuchtstoff auf einem Bildschirm als Licht sichtbar macht.

Ein Laservideosystem dieser Art ist beispielsweise aus der DE 43 24 849 C2 bekannt. Die Ablenkung erfolgt dabei in Zeilenrichtung mittels eines Polygonspiegels, die Bildablenkung wird dabei mittels eines Schwenkspiegels durchgeführt. Welche Art Spiegel zur Ablenkung eingesetzt wird, ist für die hier angesprochene Problematik allerdings völlig gleichgültig. Es kommt bei der Erfindung allein darauf an, daß eine reine Winkelablenkung in einer vorgegebenen Ebene erfolgt und die Winkel der Winkelablenkung während des Rasterns mit einem nahezu ortsfesten Scheitelpunkt für die jeweiligen Ablenkwinkel erfolgt.

Bei der beschriebenen Videoprojektion stehen diese Ebenen für die Winkelablenkung in Zeilen-und Bildrichtung üblicherweise senkrecht aufeinander. Bei einer Schrägprojektion aus der Ecke des Bildfeldes heraus treten dann jedoch geometrische Verzerrungen auf, die man jedoch möglicherweise teilweise dadurch vermindern kann, daß zwischen der Ebene für die Zeilenablenkung und derjenigen für die Bildablenkung ein zur Kompensation der Verzerrungen günstigerer Winkel als 90° gewählt ist, also eine Anordnung vorgesehen ist, die von dem Beispiel mit senkrechten Ebenen abweicht. Die im folgenden näher ausgeführte Problemstellung gilt jedoch für alle Winkel der Ablenkebenen zueinander und läßt sich mit den gleichen Prinzipien lösen, wie bei der üblichen Anordnung mit senkrecht aufeinander stehenden Ebenen.

Bei beabstandeten Orten für Zeilen- und Bildablenkung tritt eine Verzerrung auf, die insbesondere dann bedeutsam wird, wenn der Ablenkeinrichtung eine Transformationsoptik für Zeilen- und Bildablenkung folgt, die das gerasterte Bildfeld verändern und insbesondere vergrößern soll. Eine derartige Transformationsoptik ist beispielsweise in der DE 43 24 849 C2 beschrieben.

Es hat sich bei derartigen Transformationsoptiken herausgestellt, daß diese bei ebenen Bildschirmen ausschließlich dann bezüglich Farbfehler und Bildverzerrungen in geeigneter Weise korrigiert werden können, wenn die Bedingung eingehalten wird, daß der Tangens des Ausfallswinkels und der Tangens des Einfallswinkels zum Beleuchten jedes Bildpunkts in einem festen Verhältnis zueinander stehen. Bei getrennten Ablenkorten für die beiden Ablenkungen läßt sich aber das Tangensverhältnis gar nicht verwirklichen, da während des zeitlichen Ablaufs entweder der eine oder der andere Ort dominiert, ein fester Ort als Scheitelpunkt für die Ablenkwinkel gar nicht gegeben ist.

Das genannte Tangensverhältnis bezieht sich nur auf ebene Bildschirme. Bei sphärischen Projektionen, beispielsweise in die Kuppel eines Planetariums, oder eine Teilzylinderfläche, wie bei manchen Flugsimulatoren, wird auf entsprechende Verhältnisse anderer Funktionen korrigiert.

Das sich aus unterschiedlichen Ablenkpunkten ergebende Problem wird gemäß der DE 43 24 849 C2 durch Kompensation mittels einer aufwendigen Optik gelöst. Es ist zu erwarten, daß diese Transformationsoptik bei Vermeidung unterschiedlicher Ablenkorte für die beiden Ablenkungen wesentlich einfacher gestaltet werden kann. Insbesondere ist diesbezüglich anzumerken, daß dieses Problem besonders wichtig wird, wenn statt einer Vergrößerung des Bildes eine Verkleinerung gewählt wird, beispielsweise wenn die Projektionsfläche sehr weit von der Ablenkeinrichtung entfernt ist. Eine Verkleinerung der Rasteramplituden könnte dann zwar auch in Betracht gezogen werden, jedoch würde dabei die mögliche Bildpunktzahl drastisch reduziert, da der Bildpunktdurchmesser wesentlich durch den Durchmesser des Laserstrahls bestimmt ist. Diese Verringerung der Bildauflösung ist im allgemeinen unerwünscht.

Gemäß US 4 297 723 wird vorgeschlagen, daß der Ablenkort des einen Ablenkspiegels mit Hilfe einer Relaisoptik scheinbar auf den anderen Ablenkspiegel verschoben wird, so daß die Winkelablenkung dann wie aus einem Punkt von dem Ablenkort der im Lichtweg letzten Ablenkeinrichtung erfolgt.

Eine derartige Relaisoptik kann beispielsweise als afokales Linsensystem ausgebildet sein, also als ein aus zwei optischen Systemen bestehendes Linsensystem, bei dem ein im Brennpunkt des ersten Systems unter einem Winkel auslaufendes Lichtbündel auf eine Zwischenbildebene fokussiert wird, von der aus ein zweites optisches System das von der Zwischenbildebene kommende Licht wieder parallelisiert und in seinen ausgangsseitigen Brennpunkt ablenkt. Die erste und zweite Scaneinrichtung werden dann so angeordnet, daß deren Ablenkorte in dem objektseitigen Brennpunkt des ersten optischen Systems sowie dem bildseitigen Brennpunkt des zweiten optischen Systems liegen.

Wenn der Scheitelpunkt für die Ablenkwinkel der einen Ablenkrichtung bei einem derartigen System in dem eingangsseitigen Brennpunkt des ersten optischen Systems liegt und der Scheitelpunkt des Ablenkwinkels für die andere Ablenkrichtung in dem ausgangsseitigen Brennpunkt des zweiten Systems liegt, gehen beide Winkelablenkungen von dem gleichen Ort, nämlich dem ausgangsseitigen Brennpunkt des zweiten optischen Systems aus. Die Probleme, die sich damit aus unterschiedlichen Ablenkorten für die beiden Ablenkwinkel ergeben, sind damit überwunden.

Trotzdem ist diese Lösung für die Praxis wenig geeignet. Insbesondere bei Lichtbündeln, die ein breites Wellenlängenspektrum aufweisen, wird die Farbkorrektur bei gleichzeitiger Korrektur anderer optischer Fehler des ersten und des zweiten optischen Systems außerordentlich aufwendig. Der Aufwand ist beispielsweise vergleichbar einem vignetierungsfreien telezentrischen Mikroskopobjektiv guter Abbildungsqualität für das gesamte sichtbare Spektrum bei Objektfelddurchmessern im Bereich von 4 bis 5 mm sowie numerischen Aperturen zwischen 0,2 und 0,25. Außerdem ist für die Rastertechnik auch noch zusätzlich ein großer Abstand des Objektivs von den Scaneinrichtungen zu berücksichtigen, damit ausreichend Platz für die Bewegung der Ablenkspiegel gewährleistet ist.

Aufgabe der Erfindung ist es daher, eine Relaisoptik für ein Ablenksystem der genannten Art und ein entsprechendes Ablenksystem bereitzustellen, die beide weniger aufwendig als die aus dem Stand der Technik bekannten sind und sich insbesondere auch bezüglich Farbfehler einfach optimieren lassen.

Die Aufgabe wird ausgehend vom eingangs genannten Stand der Technik dadurch gelöst, daß sowohl das erste als auch das zweite optische System durch ein einziges optisches System ausgebildet sind und daß eine Spiegelfläche vorgesehen ist, die das von dem vorgegebenen Ort der ersten Scaneinrichtung durch das zuerst als erstes optisches System wirksame einzige optische System fallende Lichtbündel mindestens einmal reflektiert und danach zurück zu dem dann als zweites optisches System wirksamen einzigen optischen System richtet, wobei dessen optische Achse in Position und Richtung mit der Mittelsenkrechten der Verbindungsgeraden zwischen den vorgegebenen Orten der ersten und zweiten Scaneinrichtung übereinstimmt und die Form und Position der Spiegelfläche gemäß den Bedingungen ausgebildet ist, daß die beiden Vektoren, der Richtungsvektor des Lichtbündels sowie die Flächennormale der Spiegelfläche jeweils projiziert in die Ablenkebene der ersten Scaneinrichtung, für jeden durch die Ablenkung der ersten Scaneinrichtung gegebenen Auftreffpunkt des Lichtbündels auf der Spiegelfläche richtungsgleich sind und daß der Weg des zur Fokalfläche laufenden Lichtbündels mit der optischen Achse des einzigen optischen Systems als Symmetrieachse spiegelsymmetrisch zum Weg des von der Fokalfläche zurück laufenden Lichtbündels ist.

Statt der beiden optischen Systeme wird erfindungsgemäß nur ein einziges optisches System eingesetzt, das einmal als erstes und danach als zweites optisches System wirkt. Der Aufwand für die Relaisoptik ist damit gegenüber derjenigen, aus dem Stand der Technik bekannten, aufgrund des Spiegels halbiert.

Man hätte aber vor der Erfindung überhaupt nicht erwartet, daß dies möglich ist, denn ein Spiegel an der Stelle der Zwischenbildebene bei dem oben näher beschriebenen System würde zwar die gleiche Wirkung haben, die dann entstehende Relaisoptik wäre trotzdem für den Fall der orthogonalen Ablenkung mittels zweier Scaneinrichtungen nicht einsetzbar, da dann das Lichtbündel nach seinem Rücklauf durch das erste Linsensystem wieder in den eingangsseitigen Fokus zurückkehren würde, also an den selben Ort, in dem nur eine aber nicht zwei Scaneinrichtungen mit unterschiedlichen Ablenkebenen angeordnet werden kann. Ein solches System wäre als Relaisoptik überhaupt nicht einsetzbar.

Erst die Erkenntnis, daß man ferner die beiden Ablenkorte der Scaneinrichtungen bei geeigneter Auslegung der Spiegelfläche von der optischen Achse beabstandet halten kann, gestattet es, die Relaisoptik mit genügend Freiraum auszubilden, um zwei unterschiedliche Scaneinrichtungen geeignet anordnen zu können.

Bei beliebiger Wahl einer beliebigen Anordnung der Scaneinrichtungen mit geeigneten Abständen zur optischen Achse allein ist optisch allerdings nicht ohne Weiteres sichergestellt, daß ein Punkt wieder in einen anderen Punkt überführt wird. Erst nach längerer Überlegung hat sich herausgestellt, daß ausreichend günstige Abbildungseigenschaften erst dann erreicht werden, wenn die optische Achse in Position und Richtung mit der Mittelsenkrechten der Verbindungsgeraden zwischen den vorgegebenen Orten der ersten und zweiten Scaneinrichtung übereinstimmt und die Form und Position der Spiegelfläche gemäß der Bedingungen ausgebildet ist, daß die beiden Vektoren, der Richtungsvektor des Lichtbündels sowie die Flächennormale der Spiegelfläche jeweils projiziert in die Ablenkebene der ersten Scaneinrichtung für jeden durch die Ablenkung der ersten Scaneinrichtung gegebenen Auftreffpunkt des Lichtbündels auf der Spiegelfläche richtungsgleich sind und daß der Weg des zur Fokalfläche laufenden Lichtbündels mit der optischen Achse des einzigen optischen Systems als Symmetrisachse spiegelsymmetrisch zum Weg des von der Fokalfläche zurück laufenden Lichtbündels ist.

Diese Bedingung wird anhand der nachfolgend beschriebenen Ausführungsbeispielen noch deutlicher werden.

Die angegebene Auslegung für die Spiegelfläche mit der zusätzlichen Bedingung der Fokussierung auf einer Fokalfläche gemäß dem erfindungsgemäß berücksichtigten Stand der Technik legt die Eigenschaften der Spiegelfläche für jedes geeignete optische System eindeutig fest Insbesondere ist anzumerken, daß sich bei Vorliegen der gleichen Fokalfläche aufgrund eines farbkorrigierten einzigen optischen Systems für alle Wellenlängen weitere farbkorrigierende Maßnahmen erübrigen, da das von der Spiegelfläche zurück laufende Lichtbündel bei dem erfindungsgemäß geforderten symmetrischen Strahlengang praktisch die gleichen Änderungen erfährt, wie das zur Fokalfläche laufende Lichtbündel, jedoch mit entgegengesetztem Vorzeichen. Das wird anhand der Ausführungsbeispiele noch deutlicher werden.

Das erfindungsgemäße einzige optische System läßt sich aus diesen Gründen auch mit stark verringertem Aufwand gegenüber dem ersten oder zweiten optischen System einer herkömmlichen Relaisoptik schaffen. Der Aufwand für eine erfindungsgemäße Relaisoptik ist weitaus geringer als die Hälfte der bekannten gemäß dem Stand der Technik. Dieses Ergebnis hätte man vom Einsatz einer Spiegelfläche vor der Erfindung überhaupt nicht erwartet.

Wie aus dem oben Gesagten deutlich geworden ist, kommt es bei der Auslegung der Spiegelfläche allerdings überhaupt nicht auf eine spezielle Formgebung an, sondern ausschließlich auf das Einhalten der oben angegebenen Kriterien. Besonders gering wird der Aufwand für das einzige optische System aber, wenn man gemäß einer vorzugsweisen Weiterbildung der Erfindung nur eine einzige Reflexion an der Spiegelfläche zuläßt. Dann wird nämlich die günstigste Spiegelfläche gemäß obiger Kriterien genau die Fokalfläche sein. Deshalb muß nur ein einziges optisches System, dessen Fokalfläche für alle Farben gleich ist, berechnet werden. Die Spiegelfläche ergibt sich dann einfach aus deren Form und Lage.

Die Relaisoptik sollte ferner möglichst geringe Abmessungen haben. Um dieses Ziel zu erreichen, kann man gemäß einer bevorzugten Weiterbildung der Erfindung auch die Spiegelfläche selbst als Bauelement für das einzige optische System verwenden, wenn sie so dimensioniert wird, daß sie die Brennweite reduziert. Dazu ist gemäß einer vorzugsweisen Weiterbildung der Erfindung vorgesehen, daß die Fokalfläche gekrümmt ist und der Krümmungsmittelpunkt sich auf der gleichen Seite der Spiegelfläche befindet wie das einzige optische System. Die Spiegelfläche ist dann aufgrund der Krümmung ein zusätzliches, zu anderen Bauelementen in dem optischen System fokussierendes Element, das geeignet ist, mindestens eine Linse in dem einzigen optischen System zu ersetzen.

Ein optisches System, das wie bei der Erfindung prinzipiell nur die Eigenschaft aufweisen muß, daß es fokussiert, kann im allgemeinen sowohl aus Linsen als auch Hohlspiegeln ausgebildet werden, wie auch später anhand von Ausführungsbeispielen verdeutlicht wird.

Allerdings ist der Aufbau des erfindungsgemäßen einzigen optischen Systems allein aus Linsen kostengünstiger, wenn auf höchste Parallelität des ausgehenden Lichtbündels Wert gelegt wird. Ein Parabolspiegel kann bei solchen Anforderungen nur mit erhöhtem Aufwand exakt genug gefertigt werden. Deshalb wird gemäß einer bevorzugten Weiterbildung der Erfindung vorgeschlagen, daß das einzige optische System ausschließlich ein Linsensystem ist

Die Anzahl der Linsen in dem Linsensystem sollte dabei vorzugsweise kleiner als 6 und insbesondere kleiner gleich 4 sein, um den Aufwand so gering wie möglich zu halten. Daß dies möglich ist, wird erkennbar, wenn man sich vor Augen hält, daß das einzige optische System neben seiner fokussierenden Eigenschaft sonst im wesentlichen nur der Farbkorrektur bedarf, damit für alle Lichtanteile unterschiedlicher Wellenlänge des Lichtbündels die gleiche Fokalfläche gebildet wird. Für die bekannten Relaisoptiken konnte jedoch vor der Erfindung überhaupt nicht erwartet werden, daß man mit einer derartig geringen Anzahl von Linsen auskommt.

Der Aufwand läßt sich ferner dadurch noch weiter verringern, daß die Spiegelfläche nicht als separater Spiegel ausgebildet wird, sondern gemäß einer vorzugsweisen Weiterbildung der Erfindung als Spiegelfläche auf der letzten Linse des einzigen optischen Systems vorgesehen wird. Dies kann man durch einfaches Bedampfen, beispielsweise mit Silber oder Aluminium, oder auch mittels anderer Beschichtungsarten der von der Eingangsseite abgewandten Seite der Linse erreichen. Allerdings werden die erfindungsgemäßen Merkmale nur dann erzielt, wenn die Eigenschaft, daß die Spiegelfläche gleich der letzten Linsenfläche ist, bei der Auslegung der restlichen Linsen des optischen Systems zur Einhaltung der angegebenen Bedingungen berücksichtigt wird.

Für den praktischen Einsatz von Relaisoptiken in der Abbildungstechnik kommt es auch wesentlich auf eine möglichst geringe Baugröße an. Diese läßt sich dadurch minimieren, daß die Spiegelfläche zusammen mit der Linse selbst fokussierend und damit abstandsverkürzend ausgebildet wird. Dazu ist gemäß zweier vorteilhafter Weiterbildungen der Erfindung vorgesehen, daß erstens die Krümmungsradien der verspiegelten Linse auf beiden Seiten verschieden voneinander sind und zweitens insbesondere der Krümmungsradius der verspiegelten Seite kleiner als derjenige der gegenüberliegenden Seite ist.

Bei einem erfindungsgemäßen Ablenksystem ist die vorher beschriebene Relaisoptik mit den beiden Scaneinrichtungen versehen, und diese drei Bauelemente sind bezüglich ihrer Anordnung und Spezifikation aufeinander abgestimmt.

Insbesondere ist bei einer vorteilhaften Weiterbildung des erfindungsgemäßen Ablenksystems vorgesehen, daß die beiden Scaneinrichtungen für unterschiedlich große Winkelbereiche ihrer jeweiligen Ablenkwinkel ausgelegt sind und daß diejenige Scaneinrichtung mit dem größeren Winkelbereich in Lichtausbreitungsrichtung vor der Relaisoptik als erste Scaneinrichtung sowie die andere Scaneinrichtung der Relaisoptik nachfolgend als zweite Scaneinrichtung angeordnet sind. Gegenüber der umgekehrten Anordnung der beiden Scaneinrichtungen wird damit eine geringere Wärmebelastung des Spiegels erreicht. Bei zu großer punktueller Wärmebelastung kann der Spiegel sich nämlich im Betrieb verziehen. Dadurch kann sogar seine Lebensdauer reduziert werden.

Die Wärmebelastung des Spiegels ist bei der Auslegung vor allem dann nicht vernachlässigbar, wenn man, wie beispielsweise bei der Videoprojektion üblich, als Lichtbündel Laserstrahlen verwendet und dies gilt besonders dann, wenn die Spiegelfläche in der Fokalfläche liegt. Eine Verringerung der Wärmebelastung pro Flächeneinheit reduziert ferner sowohl den Aufwand für eine eventuelle Spiegelkühlung als auch die Dicke der Spiegelfläche.

Wie vorstehend schon ausgeführt wurde, ist es von praktisch großer Bedeutung, wenn eine Ablenkeinrichtung möglichst klein dimensioniert werden kann. Kleine Spiegel erlauben z. B. wegen der verringerten Trägheit wesentlich höhere Ablenkgeschwindigeiten als größere. Die hohen Geschwindigkeiten bei kleinen Spiegeln oder kleinen Schwenkamplituden sind insbesondere für die Videotechnik von Interesse. Aus diesen Überlegungen heraus wird man sich möglichst kleine Ablenkwinkel an der Grenze des gewünschten Auflösungsvermögens wünschen. Zur Veränderung der Größe des dann erreichbaren Videobildes ist gemäß einer Weiterbildung der Erfindung vorgesehen, daß eine Transformationsoptik in Lichtausbreitungsrichtung hinter den beiden Scaneinrichtungen sowie der zwischen ihnen befindlichen Relaisoptik angeordnet ist, bei welcher der Quotient zwischen dem Tangens des Ausgangswinkels und dem Tangens des Einfallswinkels eine Konstante ist.

Das hier genannte konstante Tangensverhältnis hat sich für die Auslegung als besonders günstig erwiesen, da sich eine derartige Transformationsoptik bei ebenen Bildschirmen farbfehler- und verzerrungsarm auslegen läßt.

Allerdings kann die bekannte Transformationsoptik in Verbindung mit der genannten Relaisoptik wesentlich einfacher dimensioniert werden und ist daher weniger aufwendig als die aus dem Stand der Technik bekannte, da bei Einsatz der erfindungsgemäßen Relaisoptik keine unterschiedlichen Orte mehr für beide Ablenkungen berücksichtigt werden müssen.

Weitere Besonderheiten der Erfindung ergeben sich auch aus der nachfolgenden Beschreibung von Ausführungsbeispielen unter Bezugnahme auf die beigefügte Zeichnung. Es zeigen:
- Fig.1: ein Ablenksystem für zwei orthogonale Winkelablenkungen mit einer Relaisoptik zur Erläuterung der bei der Erfindung zur Anwendung kommenden Prinzipien;
- Fig. 2: eine schematische Darstellung des Ausführungsbeispiels für eine Relaisoptik in zwei Ansichten a und b für die beiden Ebenen der beiden Winkelablenkungen;
- Fig. 3: ein anderes Ausführungsbeispiel mit zwei Reflexionen an der Spiegelfläche in einer Darstellung wie Fig. 2a;
- Fig.4: ein weiteres Ausführungsbeispiel in der Darstellungsweise von Fig. 2a mit einem Parabolspiegel als einzigem optischen System neben der Spiegelfläche;
- Fig. 5: ein anderes Ausführungsbeispiel, bei dem mit Hilfe eines Linsensystems eine gekrümmte Fokalfläche verwirklicht ist, wobei die Ansichten Fig. 5a und 5b gemäß den Ansichten von Fig. 2a und 2b gewählt sind und Fig.5c eine perspektivische Ansicht zeigt.

In der folgenden Beschreibung soll auf die Einzelheiten eines abbildenden Systems, sei es in der Drucktechnik oder der Videotechnik, nicht näher eingegangen werden. Allerdings werden doch die grundlegenden Prinzipien der Ablenkung näher erläutert, um ein besseres Verständnis der Erfindung zu ermöglichen.

Die grundlegenden Ablenkprinzipien sind im wesentlichen unabhängig davon, ob das abzulenkende Lichtbündel monochrom, wie bei einem einzigen Laserstrahl ist, oder wie in der Farbvideotechnik, üblicherweise aus drei Laserstrahlen der Farben Rot, Grün und Blau zusammengesetzt ist. Trotzdem wird im folgenden auch explizit auf mögliche Maßnahmen zur Farbkorrektur hingewiesen.

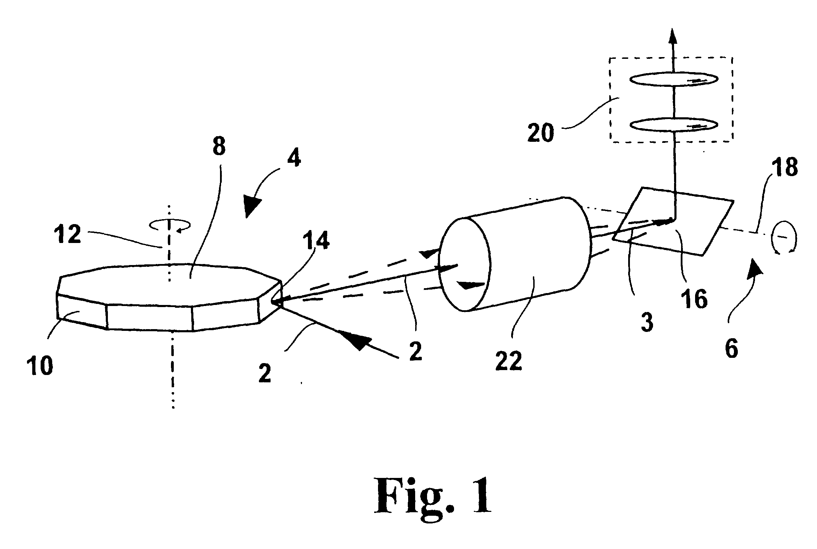

In Fig. 1 ist ein derartiges Ablenksystem, wie es beispielsweise in der Laservideotechnik verwendet wird, prinzipiell erläutert. In der Videotechnik wird eine schnelle Zeilenablenkung und senkrecht dazu eine langsamere Bildablenkung durchgeführt, so daß ein rechteckiges Raster von Bildpunkten ähnlich wie bei den bekannten Fernsehröhren, dort allerdings mit Elektronenstrahlen, beleuchtet wird. Ähnlich wie bei der Braunschen Röhre der Elektronenstrahl intensitätsmoduliert wird, wird das in der Laservideotechnik eingesetzte Lichtbündel 2 gemäß Farbe und Helligkeit des jeweils beleuchteten Bildpunktes moduliert und dann über zwei Scaneinrichtungen 4 und 6 bild- und zeilenmäßig abgelenkt, bevor es auf einen Bildschirm fällt, auf dem das Videobild dann beobachtbar wird. Das wegen der einzelnen Bildpunkte notwendige Zeitmitteln ist auf die Trägheit des Auges eines Beobachters zurückzuführen, damit das ganze Bild sichtbar wird. Daraus ist erkennbar, daß für übliche Fernsehnormen sehr schnelle Ablenkungen erforderlich sind.

Im Ausführungsbeispiel gemäß Fig. 1 ist die erste Scaneinrichtung 4 ein Ploygonspiegel 8, also ein polygonförmiger Rotationskörper mit mehreren verspiegelten Facetten 10 an seinem Umfang, der sich schnell um seine Rotationsachse 12 dreht. Aufgrund der Vielzahl von Facetten 10 und der hohen möglichen Umdrehungsgeschwindigkeit ergeben sich für die Zeilenablenkung eines Videobildes ausreichend hohe Ablenkgeschwindigkeiten für die durch die spiegelnden Facetten bewirkten Winkelablenkungen.

Wichtig ist hier aber vor allem, daß sich die durch die erste Scaneinrichtung bewirkte Ablenkung des Lichtbündels 2 im wesentlichen als von einem Ort 14 ausgehende reine Winkelablenkung darstellen läßt.

Die zweite Scaneinrichtung 6 hat die gleiche Eigenschaft. Für diese wird ein Kippspiegel 16 eingesetzt, der zur Durchführung der Bildablenkung um eine Achse 18 hin- und hergeschwenkt wird. Wenn das von der Scaneinrichtung 4 abgelenkte Lichtbündel auf diese Achse 18 fällt, legt sie den Scheitelpunkt für die jeweilige Winkelablenkung dieser zweiten Scaneinrichtung 6 fest.

Zur Aufweitung wird das über die beiden Scaneinrichtungen 4 und 6 gerasterte Bildfeld anschließend mittels einer Transformationsoptik 20 vergrößert. Diese besteht aus einem im wesentlichen afokalen Linsensystem, das nach der Tangensbedingung korrigiert ist, d.h., das Verhältnis des Tangens des Ausfallsfallswinkels zu dem Tangens des Einfallswinkels ist eine Konstante.

Eine derartige Transformationsoptik laßt sich nur dann ohne großen Aufwand schaffen, wenn der Ort der Winkelablenkung 14 und der andere durch die Achse 18 gegeben Ort einen sehr geringen Abstand voneinander haben oder im Idealfall sogar übereinander liegen. Um eine derartige Ausgangsbedingung für die Transformationsoptik 20 zu schaffen, kann man eine Relaisoptik 22 einsetzen, wie sie einleitend beschrieben wurde, und welche Richtung und Ort des Lichtbündels 2 nach Ablenkung durch die Scaneinrichtung 4 so ändert, wie sie sein würde, wenn sie aus dem Ablenkpunkt der Scaneinrichtung 6 erfolgen würde. Diese Wirkung der Relaisoptik ist in der Fig. 1 durch unterbrochene Linien schematisch angedeutet.

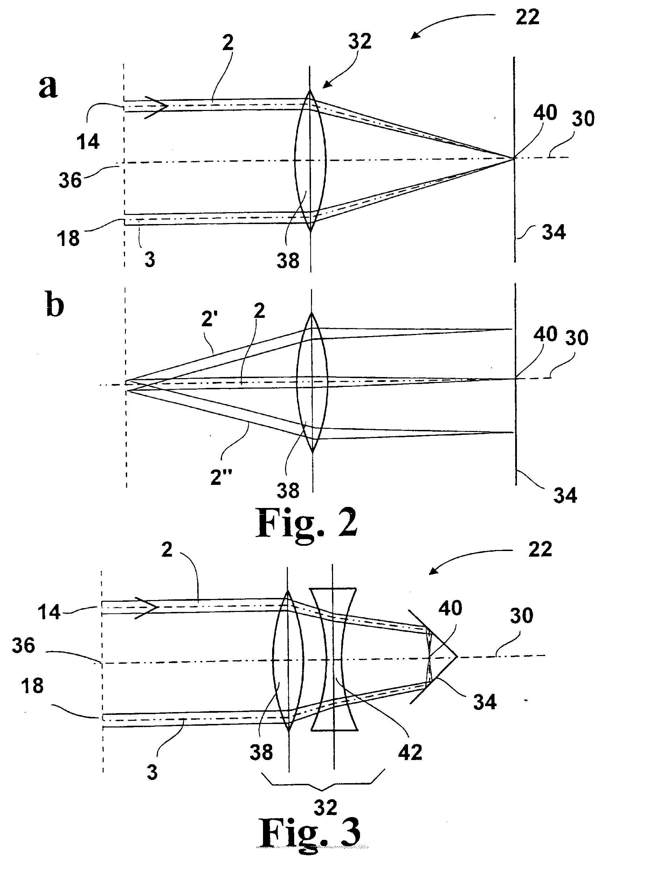

Der Aufbau gemäß Fig. 1 zeigt eine Anordnung gemäß dem Stand der Technik, bei dem für das in die Relaisoptik einfallende und aus dieser wieder ausfallende Lichtbündel dieselbe optische Achse als Symmetrieachse vorgesehen ist. Für die erfindungsgemäße Relaisoptik werden dagegen Ausführungsbeispiele gemäß Fig. 2 bis 5 vorgeschlagen, bei denen das einfallende Lichtbündel 2 und das ausfallende Lichtbündel 3 nicht auf der gleichen Achse liegen. Weiter liegen die beiden Scaneinrichtungen bei den hier im einzelnen gezeigten Relaisoptiken auf der gleichen Seite der Relaisoptik 22, während sie gemäß Fig.1 beidseitig zu ihr angeordnet sind.

Dem Bezugszeichen 30 ist in den Figuren 2 bis 5 immer die optische Achse zugeordnet. Das vorher schon genannte einzige optische System trägt weiter das Bezugszeichen 32, während die gegenüber dem Stand der Technik neue Spiegelfläche durchgehend mit dem Bezugszeichen 34 versehen ist. Die Ablenkorte 14 und 18 befinden sich in allen Ausführungsbeispielen auf einer Verbindungsgeraden 36, deren Mittelsenkrechte die optische Achse 30 des optischen Systems 32 ist.

Das optische System 32 ist in Fig. 2 schematisch durch eine einzelne Linse 38 verdeutlicht, die aber in praxi auch durch ein mehrlinsiges optisches System verwirklicht sein kann, vor allen Dingen, wenn zur Farbkorrektur ein Apochromat verwendet wird, um für alle Farbanteile des Lichtbündels 2 die gleichen Brennpunkte zu schaffen. Die Spiegelfläche 34 ist im Ausführungsbeispiel von Fig. 2 durch einen ebenen Spiegel ausgebildet, dessen Flächennormale in Richtung der optischen Achse 30 weist.

Um die Wirkungsweise zu verdeutlichen, ist das Ausführungsbeispiel gemäß Fig. 2 in zwei Ansichten a und b gezeigt. In Fig. 2a ist dabei eine Projektion auf eine Ebene dargestellt, die senkrecht auf der Ebene der Winkelablenkung der ersten Scaneinrichtung 4 steht, während Fig. 2b schematisch eine Projektion auf die Ebene der Winkelablenkung zeigt.

Die Verbindungsgerade 36 zwischen den Orten liegt in der objektseitigen Brennebene des optischen Systems 32, während die Spiegelfläche 34 in dessen bildseitiger Brennebene liegt. Diese Lage der Spiegelfläche 34 führt dazu, daß das vom Ort 18 ausgehende Lichtbündel für alle Ablenkwinkel in der Projektion von Fig. 2a auf einen einzigen Punkt 40 fokussiert wird, von dem aus es mit entgegengesetztem Winkel zurückläuft. Danach wird es von dem optischen System 32 wieder parallelisiert und dann wieder als parallelels Lichtbündel in den Ort 18 auf die Brennebene abgelenkt, von wo es dann mit der zweiten Ablenkeinrichtung 6 gerastert wird. Aufgrund der durch die gegebene Symmetrie möglich gewordene Beabstandung der Orte 14 und 18, wie aus Fig. 2a deutlich ersehen werden kann, ist genug Raum für die Anordnung zweier Scaneinrichtungen vorhanden.

Der Punkt 40 ist aber nur in dieser Projektion ein geometrischer Punkt, wie vor allem aus der Projektion der Relaisoptik gemäß Fig. 2b hervorgeht. Hier sind schematisch drei unterschiedliche Lichtbündel 2, 2' und 2'' mit verschiedenen Ablenkwinkeln verdeutlicht. Gemeinsam ist allen drei Lichtbündeln 2, 2' und 2'', daß sie auf der Spiegelfläche 34 fokussiert werden, wie es auch schon aus Fig. 2a erkennbar war. Sie treffen in dieser Projektion jedoch an unterschiedlichen Orten der Spiegelfläche 34 auf. Weil aber die Richtung der Flächennormale der Spiegelfläche 34 in dieser Projektion gleich der Auftreffrichtung der fokussierten Lichtbündel ist, werden die Lichtbündel gemäß Fig. 2b, projiziert in die genannte Ebene, auf dem gleichen Weg zurück reflektiert, auf dem sie zu der Spiegelfläche 34 gelangt sind und haben nach Rücklauf den gleichen Winkel, allerdings mit umgekehrter Lichtfortpflanzungsrichtung wie die einfallenden Lichtbündel 2, 2' und 2''. Der scheinbare Ort der Ablenkung liegt jedoch nach Durchlauf des Lichtbündels durch die Relaisoptik 22 senkrecht zu dieser Projektionsebene, wie aus Fig. 2a hervorgeht, vom tatsächlichen Ort 14 der ersten Scaneinrichtung 4 zum Ort 18 der zweiten Scaneinrichtung 6 entfernt.

Das Ausführungsbeispiel erfüllt also alle Anforderungen für den Einsatz in einem Ablenksystem gemäß Fig. 1. Wie allerdings deutlich wurde, reicht im Prinzip eine einzige Linse 38 aus.

Im Falle der Kompensation von Farbfehlern wird man ein chromatisch korrigiertes Linsensystem einsetzen, damit die in dem Ausführungsbeispiel wesentliche Bedingung der Lage der Foki für alle Wellenlängen erfüllt ist

In Fig. 3 ist schematisch ein Ausführungsbeispiel in der gleichen Projektion wie dasjenige von Fig. 2a gezeigt, bei dem der Fokus im Gegensatz zum Ausführungsbeispiel von Fig. 2 nicht auf der Spiegelfläche 34 liegt.

Um die Verhältnisse besser zu verdeutlichen, sind die gleichen aufgrund der Linse 38 gegebenen Verhältnisse gewählt, jedoch wurde eine weitere Linse 42 eingezeichnet, mit welcher der bildseitige Brennpunkt des optischen Systems 32 in größere Entfernungen gelegt ist.

Die Spiegelfläche 34 ist in der der Fig. 2a entsprechenden Ansicht von Fig. 3 mit zwei unter 45° zur optischen Achse 30 angeordneten ebenen Spiegeln verwirklicht. Aufgrund der Linse 42 und der gewinkelten Spiegel wird das Lichtbündel in diesem Ausführungsbeispiel aber zweimal reflektiert. Der Brennpunkt liegt ebenfalls auf der optischen Achse 30, jedoch entfernt von der Spiegelfläche 34, was besonders günstig bezüglich einer geringen Wärmebelastung der Spiegelfläche 34 ist.

Für das Verständnis der Verhältnisse senkrecht zu der in Fig. 3 gezeigten Ebene wird der Fachmann auf die Fig. 2b mit der dazugehörigen Beschreibung verwiesen, da hier die gleichen Abbildungsprinzipien zur Anwendung kommen.

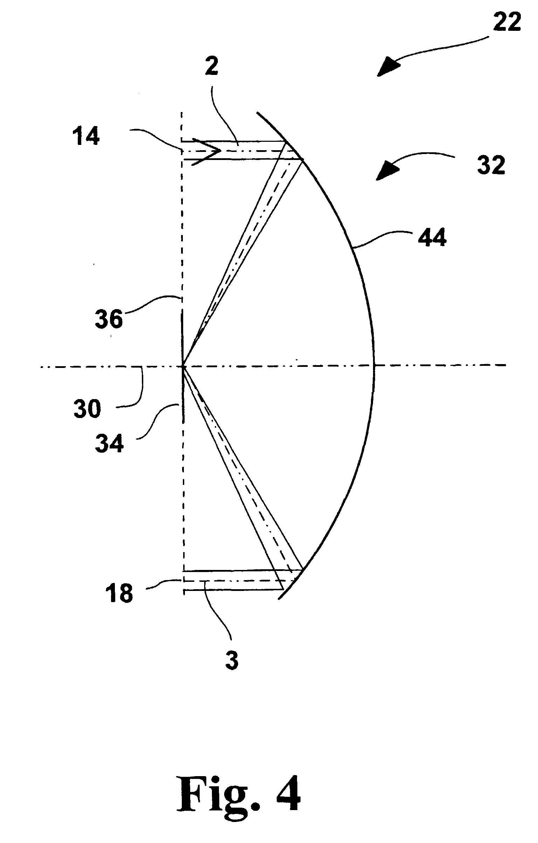

Bei dem Ausführungsbeispiel von Fig. 4 ist statt der Linse 38 des Ausführungsbeispiels von Fig. 2 ein Parabolspiegel 44 vorgesehen. Die Spiegelfläche 34 ist wieder durch einen ebenen Spiegel 3 ausgebildet, der jedoch in der in Fig. 3 gezeigten Ebene eine kleinere Abmessung als die Länge der Verbindungsgeraden 36 hat, um den Lichtbündeln 2 und 3 den Weg zur Spiegelfläche 34 freizuhalten.

Wie eine Linse durch einen Parabolspiegel zu ersetzen ist, ist dem Fachmann bekannt, so daß dieses Ausführungsbeispiel keiner weiteren Erläuterungen bedarf. Insbesondere wird zum besseren Verständnis explizit auf die Fig. 4 verwiesen. Aus dieser Figur ist ersichtlich, daß die Orte 14 und 18 und damit die Scaneinrichtungen 4 und 6 für dieses Ausführungsbeispiel in derselben Brennebene liegen wie die Spiegelfläche 34.

Insbesondere tritt bei einer derartigen Relaisoptik 22 auch keine Dispersion auf, da ausschließlich Spiegelflächen vorgesehen sind. Deswegen erübrigen sich dann alle Maßnahmen für Farbkorrekturen.

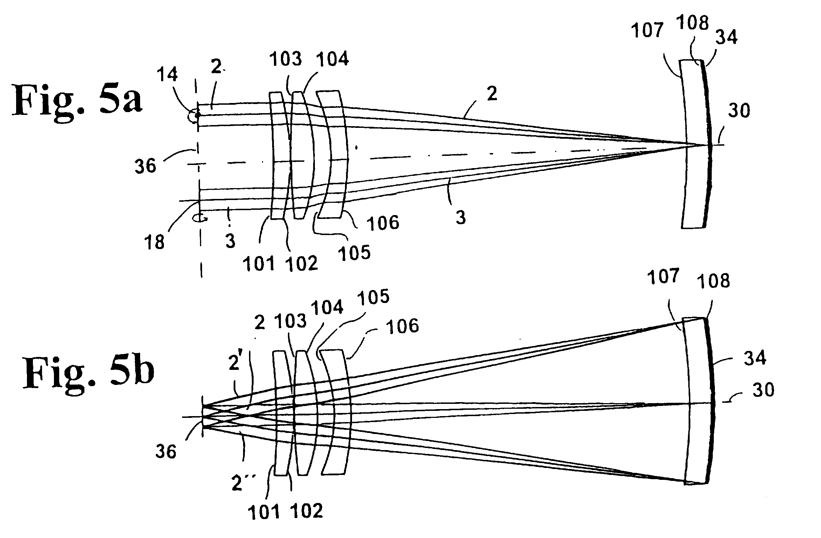

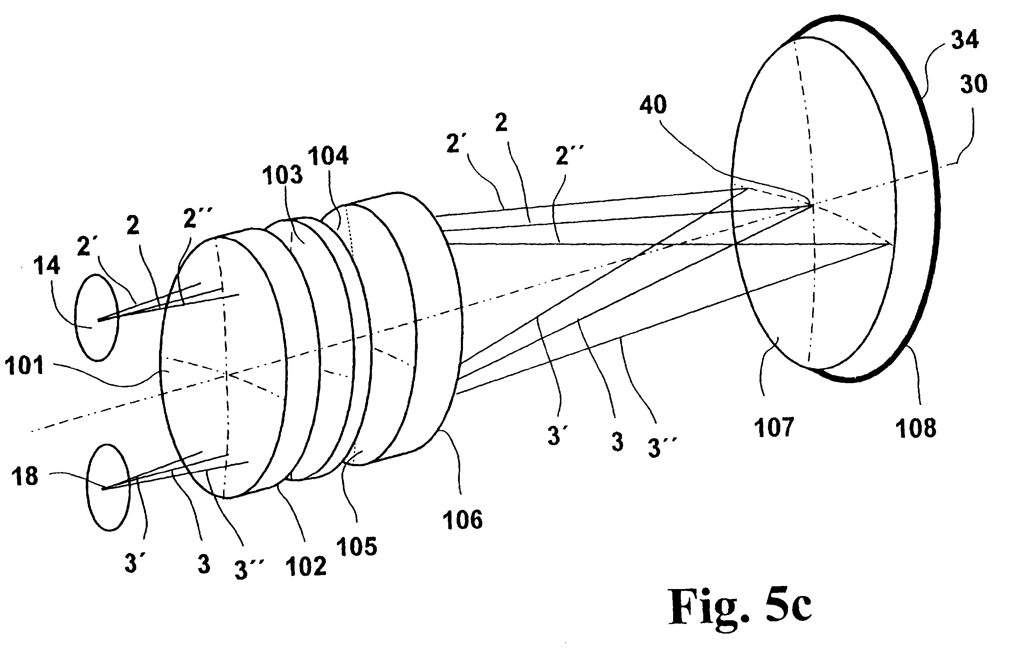

In Fig. 5 ist ein weiteres Ausführungsbeispiel gezeigt, das insbesondere in allen Einzelheiten berechnet wurde. Die Linsendaten sind in der beigefügten Tabelle angegegeben, in der die Spalte 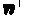 Bezugszeichen" die jeweilige in der Fig. 5 gekennzeichnete Linsen- bzw. Spiegelfläche bezeichnet. Die daneben liegende Spalte führt die jeweiligen Krümmungsradien für diese Flächen in Milllimetern auf.

Der darauf folgende Teil der Tabelle beinhaltet physikalische Werte für den Bereich zwischen den Flächen. In der ersten Spalte dieses Teils ist der jeweilige Abstand nebeneinander liegender Flächen auf der optischen Achse 30 in Milllimetern angegeben. Die darauffolgenden drei Spalten geben den Brechungsindex jeweils für die Wellenlängen 532 nm, 447 nm und 635 nm an. Wenn in der mittleren dieser Spalten 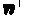 Luft" angegeben ist, handelt es sich um eine Luftstrecke, also haben die Brechungsindizes für diese Zwischenräume bei den drei angegebenen Wellenlängen den Wert von ungefähr eins.

Die drei angegebenen Wellenlängen wurden deshalb gewählt, weil die gezeigte Optik für ein Laserprojektionsgerät, das mit drei in einem einzigen Lichtbündel zusammengefaßten Laserstrahlen dieser Wellenlängen arbeitet, berechnet wurde.

Wie aus der Tabelle auch abgelesen werden kann, hat die Spieglfläche 34 einen Abstand Null zu der Linsenfläche 108 und weist den gleichen Krümmungsradius auf. Das heißt, die Spiegelfläche 34 kann auf der letzten Linsenfläche aufgedampft oder abgeschieden werden. Dazu eignet sich beispielsweise Silber und Aluminium.

Fig. 5a und Fig. 5b zeigen die gleichen Projektionen, wie sie anhand von Fig. 2a und 2b schon näher beschrieben wurden. Fig. 5c zeigt noch einmal explizit eine dreidimensionale Ansicht, mit welcher der Strahlverlauf der Lichtbündel 2 und 3 im Raum näher verdeutlicht wird. Insbesondere wurde dieses Ausführungsbeispiel für die Bedingung berechnet, daß die letzte Fläche des Linsensystems als Spiegelfläche 34 ausgebildet wird, also daß sie gleich der Fokalfläche ist.

Die als Ausführungsbeispiele gezeigten Relaisoptiken 22 zeigen, in welch vielfältiger Weise die Erfindung ausgebildet werden kann. Wichtig für die dargestellte Funktionsweise ist einmal die in den Figuren 2 bis 5 deutlich erkennbare Symmetrie zur optischen Achse für das hin und zurück laufende Lichtbündel 2 bzw. 3 sowie die aus der Projektion der Figuren 2b und 5b erkennbaren gleichen Richtungen der Normalen der jeweiligen Spiegelfläche 34 und der Auftreffrichtung des Lichtbündels 2. Diese Gleichheit bewirkt, daß das in der dargestellten Projektion betrachtete reflektierte Lichtbündel auf dem gleichen Weg zurückläuft und am zweiten Ort mit dem gleichen Winkel eintrifft, mit dem es am ersten Ort 14 in die Relaisoptik 22 eingelaufen ist.

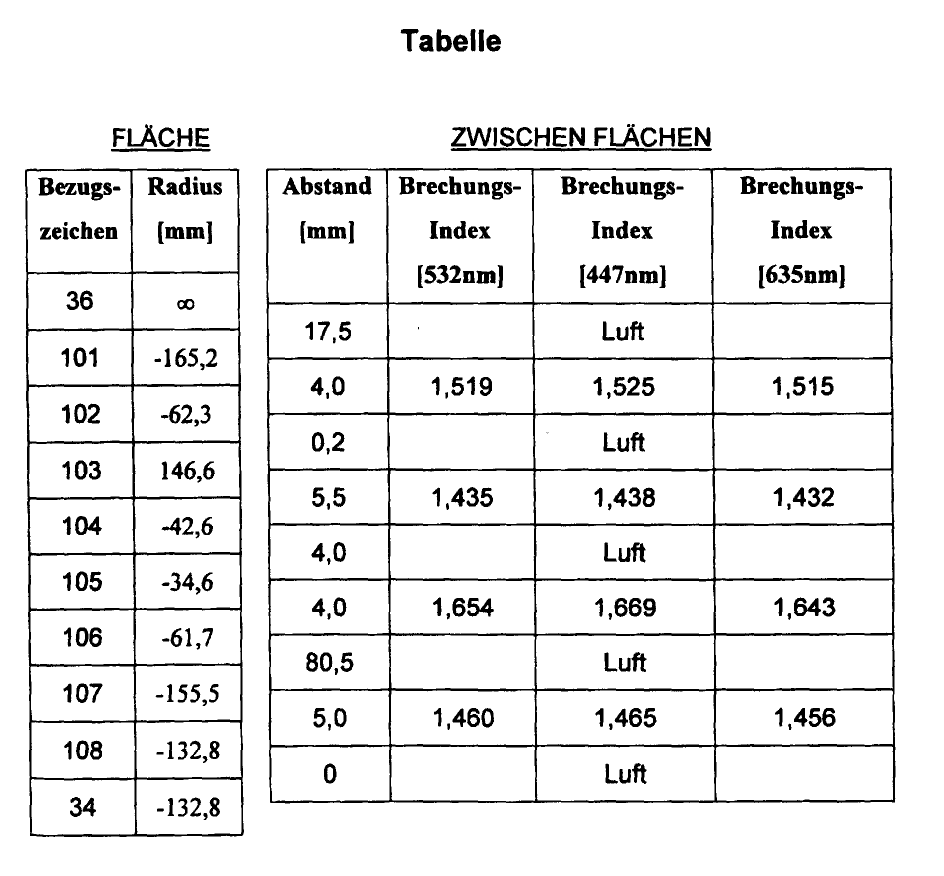

## Patentansprüche

1. Relaisoptik (22) für ein Ablenksystem, bei dem zwei Scaneinrichtungen (4, 6) vorgesehen sind, von denen jede den Winkel eines Lichtbündels (2, 3) von einem für jede Scaneinrichtung (4, 6) separat vorgegebenen Ort (14, 18) in einer vorgegebenen Ablenkebene innerhalb eines vorgegebenen Ablenkbereichs ändert, und die Relaisoptik (22) ein erstes optisches System aufweist, das ein von dem vorgegebenen Ort (14) für die erste Scaneinrichtung (4) ausgehendes paralleles Lichtbündel (2) auf einer Fokalfläche (40) fokussiert, sowie ein zweites optisches System, welches das dann von der Fokalfläche (40) kommende Lichtbündel (3) parallelisiert sowie zu dem vorgegebenen Ort (18) der zweiten Scaneinrichtung (6) ablenkt aufweist, **dadurch gekennzeichnet**, daß sowohl das erste als auch das zweite optische System durch ein einziges optisches System (32) ausgebildet sind und daß eine Spiegelfläche (34) vorgesehen ist, die das von dem vorgegebenen Ort (14) der ersten Scaneinrichtung (4) durch das zuerst als erstes optisches System wirksame einzige optische System (32) fallende Lichtbündel (2) mindestens einmal und danach zurück zu dem dann als zweites optisches System wirksamen einzigen optischen System (32) richtet, wobei dessen optische Achse (30) in Position und Richtung mit der Mittelsenkrechten der Verbindungsgeraden zwischen den vorgegebenen Orten (14,18) der ersten und zweiten Scaneinrichtung (4, 6) übereinstimmt und die Form und Position der Spiegelfläche (34) gemäß der Bedingungen ausgebildet ist, daß die beiden Vektoren, der Richtungsvektor des Lichtbündels (2) sowie die Flächennormale der Spiegelfläche (34) jeweils projiziert in die Ablenkebene der ersten Scaneinrichtung (4), für jeden durch die Ablenkung der ersten Scaneinrichtung (4) gegebenen Auftreffpunkt des Lichtbündels (2) auf der Spiegelfläche (34) richtungsgleich sind und daß der Weg des zur Fokalfläche (40) laufenden Lichtbündels (2) mit der optischen Achse (30) des einzigen optischen Systems (32) als Symmetrieachse spiegelsymmetrisch zum Weg des von der Fokalfläche (40) zurück laufenden Lichtbündels (3) ist.

2. Relaisoptik (22) nach Anspruch 1, dadurch gekennzeichnet, daß das Lichtbündel (2, 3) auf seinem Weg von dem einzigen optischen System (32) und zurück an der optischen Fläche nur einmal reflektiert wird und die Spiegelfläche (34) in Position und Form gleich der Fokalfläche (40) ist.

3. Relaisoptik (22) nach Anspruch 2, dadurch gekennzeichnet, daß die Fokalfläche (40) gekrümmt ist und der Krümmungsmittelpunkt sich auf der gleichen Seite der Spiegelfläche (34) befindet wie das einzige optische System (32).

4. Relaisoptik (22) nach einem der Ansprüche 1 bis 3, dadurch gekennzeichnet, daß das einzige optische System (32) ein Linsensystem ist.

5. Relaisoptik (22) nach Anspruch 4, dadurch gekennzeichnet, daß die Anzahl der Linsen im Linsensystem kleiner gleich 6 und insbesondere kleiner gleich 4 ist.

6. Relaisoptik (22) nach einem der Ansprüche 1 bis 5, gekennzeichnet durch eine auf einer Seite verspiegelte Linse, deren Verspiegelung die Spiegelfläche (34) ist.

7. Relaisoptik (22) nach Anspruch 6, dadurch gekennzeichnet, daß die Krümmungsradien der verspiegelten Linse auf beiden Seiten unterschiedlich sind.

8. Relaisoptik (22) nach Anspruch 6 oder 7, dadurch gekennzeichnet, daß der Krümmungsradius der verspiegelten Linse auf der verspiegelten Seite kleiner als derjenige auf der gegenüberliegenden Seite ist.

9. Ablenksystem mit einer Relaisoptik (22) nach einem der Ansprüche 1 bis 8, gekennzeichnet durch eine erste und zweite Scaneinrichtung (6), deren Ablenkebenen, deren Ablenkbereiche sowie deren Anordnungen bezüglich des jeweiligen Ortes (14,18) dem Aufbau der Relaisoptik (22) angepaßt sind.

10. Ablenksystem nach Anspruch 9, dadurch gekennzeichnet, daß die beiden Scaneinrichtungen (4, 6) für unterschiedlich große Winkelbereiche ihrer jeweilige Ablenkwinkel ausgelegt sind und daß diejenige Scaneinrichtung (4, 6) mit dem größeren Winkelbereich in Lichtausbreitungsrichtung vor der Relaisoptik (22) als erste Scaneinrichtung (4) sowie die andere Scaneinrichtung (4, 6) der Relaisoptik (22) nachfolgend als zweite Scaneinrichtung (6) angeordnet sind.

11. Ablenksystem nach einem der Ansprüche 9 oder 10, dadurch gekennzeichnet, daß eine Transformationsoptik (20) in Lichtausbreitungsrichtung hinter den beiden Scaneinrichtungen ((4, 6) sowie der zwischen ihnen befindlichen Relaisoptik (22) angeordnet ist, bei welcher der Quotient zwischen dem Tangens des Ausgangswinkels und dem Tangens des Einfallswinkels eine Konstante ist.
